# EUROPEAN PATENT APPLICATION

(11) **EP 4 660 152 A1**
(43) Date of publication of application: **10.12.2025**
(21) Application number: 24179538.4
(22) Date of filing: 03.06.2024
(51) Int. Cl.: C02F 1/28, C02F 1/44, B01D 61/14, B01D 61/16, B01J 20/20, B01J 20/28, C02F 101/20, C02F 101/30, C02F 101/36, C02F 1/42

(54) **PROCESS AND SYSTEM FOR WATER TREATMENT**

(71) Applicant: NG Nordic Sweden AB, 692 85 Kumla (SE)
(72) Inventor: ASHOUR, Radwa, SE-692 85 Kumla (SE); VON KRONHELM, Thomas, SE-692 85 Kumla (SE)
(74) Representative: Laine IP Oy

(57) **Abstract**

The present invention concerns a water treatment process, wherein water to be treated is contacted with powder activated carbon (PAC) for removal of micropollutants. The process comprises two or more treatment stages (S1, S2) arranged in series, each treatment stage (S1, S2) comprising a contacting step (T1, T2) wherein water to be treated is contacted with powder activated carbon, and a subsequent ultrafiltration step (UF1, UF2) wherein powder activated carbon (UF-PAC-1, UF-PAC-2) is separated from treated water. Furthermore, the present invention concerns a water treatment system suitable for carrying out the process of the invention.

## Description

### Field of the Invention

The present invention concerns a water treatment process and a corresponding water treatment system, wherein water is contacted with powder activated carbon for removal of micropollutants.

### Background of Invention

Water resources are of great importance for all living organisms on earth, with freshwater being crucial for plants and wildlife, as well as for humans. Freshwater makes up less than 3% of the water resources on earth, with only a fraction of that being readily available, and furthermore, with a substantial degree being unsuitable for human consumption without some treatment. A large portion of the freshwater extracted from the environment is used in agriculture and in industrial processes, which further contributes to the pollution of waters upon reintroduction into nature. Furthermore, a major source of pollutants is derived directly from human use, through sewage water and urban wastewater. Such pollutants include, for example, microplastics, heavy metals and different types of organic substances.

An increasing concern has been directed to pollutants with high chemical stability properties, in particular per- and polyfluoroalkyl substances (PFAS), which comprise numerous thousands of compounds that are hazardous for both humans and wildlife. The bond between carbon and fluorine is extremely strong, making PFAS as a group of highly stable, persistent substances. PFAS have been observed to contaminate groundwater, surface water and soil as well as bioaccumulate in organisms, including humans. The PFAS are difficult to degrade due to their high chemical stability, that have gained them the title of "forever chemicals".

PFAS have been manufactured since the 1950s and are used in a wide range of goods and chemical products for their desirable technical properties to repel fat, dirt and water. Numerous peer-reviewed studies have demonstrated PFAS related potential for severe health consequences, such as, several types of cancers, liver dysfunction, decreased immunity, infertility and hormone interference. PFAS are utilized in the production of numerous common household products such as non-stick cookware, waterproof clothing, medical equipment, and food packages. The widespread use of PFAS containing goods leads to the penetration of chemicals into our water sources, soil, and atmosphere, eventually ending in their entry inside our bodies which leads to a worldwide disaster.

As a response to the increased concern related to PFAS, authorities worldwide have implemented strict regulations regarding PFAS. The European Directive (EU) 2020/2184 has included PFAS into the drinking water standard and established a limit value of 90 ng/L for the combined concentration of 20 PFAS compounds. The new rules come into effect in 2026, that permitted concentration of PFAS in drinking water will be lowered from 90 ng/L to 4 ng/L.

Due to the increased concern and awareness relating to PFAS, and the fact that the compounds are so stable that they will remain in the nature and even accumulate over time, there is a great need for treatment processes capable of removing PFAS from water sources.

In water treatment processes and systems, in particular for PFAS removal in large scale, the current solution relies on existing separation technologies including activated carbon, ion exchange (IX) and membrane separation, typically using nanofiltration (NF) or reverse osmosis (RO). Such technologies can be combined in different configuration options or used singularly. The performance of the treatment system is dependent on the concentration and type of pollutants in the feed water, with ion exchange resins performing well on low PFAS concentrations and activated carbon being preferred at higher PFAS concentrations.

Activated carbon is widely used in water and wastewater treatment systems owing to its capacity to efficiently remove PFAS and a wide array of contaminants that may be found in different water sources. One benefit with using activated carbon is that the water recovery is high, with a typical recovery rate of around 99-100 %. On the other hand, one drawback of current processes utilizing activated carbon is the high amount of spent activated carbon that is produced in the process. The spent activated carbon is typically disposed or incinerated. Regeneration of the spent activated carbon is at least in some extent possible, but typically leads to a 15% loss of capacity. The cost for processes based on activated carbon is moderate, most costs being related to the need to add fresh activated carbon and the handling of spent activated carbon. A further challenge with the use of activated carbon in current processes is the poor removal rate for short-chain PFAS.

Current water treatment processes utilizing activated carbon are relying on granular activated carbon (GAC), having moderate pollutant adsorption capacity. GAC is, due to its particle size, relatively easy to separate from water streams and can also be used in fixed bed configurations. However, the use of GAC filters have not shown good results in the removal of C3-5 short-chain PFAS; after <1000 treating bed volumes, short-chain PFAS, such as PFBA and PFPeA, are readily released from the carbon surface due to competing adsorption of long and short-chain PFASs onto the GAC.

Powder activated carbon (PAC), is considered a more efficient method for adsorbing PFAS than granular activated carbon, because of its greater adsorption capacity due to the smaller particle size, creating a considerably larger surface area per gram of activated carbon used. This would in theory provide for more efficient use of the activated carbon, and thus reduce the total cost of the system. The problem in the currently available processes is related to difficulties to collect the spent PAC from the treated water to utilize the full capacity thereof. Currently, the PAC is collected via flocculation and sand filtration, with the drawback that large impure sludge volumes are formed, which makes reuse of PAC unapplicable in current full-scale systems.

Ion exchange is effective in removing PFAS, but the process is relatively sensitive and the removal efficiency can be impacted by fouling and resin saturation. Like in the case of granular activated carbon, the separation of short chain PFAS is challenging also when employing ion exchange. A further drawback is the relatively high amount of chemical waste generated during resin regeneration, whereby it is typical to use the resin once and incinerate. The cost for ion exchange is moderate to high, due to the cost on resin, resin replacement or chemical regeneration, and required infrastructure.

Membrane separation, such as nanofiltration or reverse osmosis, can be highly efficient in removing PFAS, with a removal rate of 95-99%, including short chain PFAS. It is a robust system, with 85-90% of the feed water becoming permeate. The membrane can typically be used for 2-3 years before disposal. The cost for a membrane separation system is still high, both due to the investment cost of the complex membrane system and due to the moderate to high membrane maintenance costs, and cost relating to the handling of rejected waste, typically being 10-15% of the feed volume.

In view of the drawback with the currently available technologies as presented above, there is still a need for a water treatment process that is capable of removing micropollutants from water and that is both cost and resource efficient. In particular, there is a need for a process that effectively can remove both short chain PFAS compounds and long chain PFAS compounds.

### Summary of the Invention

The invention is defined by the features of the independent claims. Some specific embodiments are defined in the dependent claims.

According to a first aspect of the present invention, there is provided a water treatment process, wherein water to be treated is contacted with powder activated carbon (PAC) for removal of micropollutants. The process comprises two or more treatment stages arranged in series, each treatment stage comprising:
i) a contacting step wherein water to be treated is contacted with powder activated carbon to form a mixture of powder activated carbon and water, and
ii) a subsequent ultrafiltration step wherein the mixture of step i) is separated into treated water and ultrafiltration-captured powder activated carbon,
in which process:
- water to be treated is introduced into the process as feed water supplied to the most upstream treatment stage,
- treated water obtained in step ii) of each treatment stage is transferred to step i) of a downstream treatment stage or, in the case of the most downstream treatment stage, to a step of recovering treated water,
- ultrafiltration-captured powder activated carbon obtained in step ii) of each treatment stage is transferred to step i) of an upstream treatment stage or, in the case of the most upstream treatment stage, to a step of removing ultra-filtration captured powder activated carbon from the process as spent powder activated carbon, and
- fresh powder activated carbon is added to step i) of the most downstream treatment stage.

According to a second aspect of the present invention, there is provided a system for water treatment, wherein the system comprises means for contacting water to be treated with powder activated carbon (PAC) for removal of micropollutants. The system comprises at least two treatment stages arranged in series, each treatment stage comprising:
- a contacting unit for contacting water to be treated with powder activated carbon, the contacting unit comprising a mixing unit, an inlet for water to be treated, means for adding powder activated carbon, and an outlet for a mixture of treated water and powder activated carbon,
- an ultrafiltration unit arranged downstream of the contacting unit, the ultrafiltration unit comprising an inlet that is in fluid connection with the outlet of the contacting unit of the same treatment stage, and an outlet that is in fluid connection with a contacting unit of a downstream treatment stage or, in the case of the most downstream treatment stage, in fluid connection with a recovery unit for treated water,
- means for recovering ultrafiltration-captured powder activated carbon from the ultrafiltration unit, and
- means for transferring the recovered ultrafiltration-captured powder activated carbon to an upstream treatment stage or, in the case of the most upstream treatment stage, means for removing ultrafiltration-captured powder activated carbon from the system as spent powder activated carbon.

Thus, the present invention concerns a water treatment process, in particular for removal of micropollutants, such as polyfluoroalkyl substances (PFAS), pharmaceuticals, pesticides, dissolved organic carbon (DOC) and total organic carbon (TOC), microplastics, heavy metals or decomposition products thereof, without being limited thereto.

Several advantages are reached using the present invention. Among others, the process of the invention provides a simple and low-cost process for removal of micropollutants. When compared to traditional systems relying on purification using activated carbon, the consumption of activated carbon is reduced while the purification result is maintained or improved. The recirculation scheme of the process allows for removal of pollutants that are difficult to remove in traditional systems using activated carbon, and is in particular beneficial for the removal of short-chain PFAS. Furthermore, due to the reduced need for fresh activated carbon, the amount of spent activated carbon will be reduced as well, whereby the costs associated therewith will be lower, such as incineration or regeneration costs. Zero wastewater is produced in the process and likewise, the full amount of powder activated carbon can be recovered in each stage and reused until saturated, typically after 3-6 contacting cycles depending on the quality of the feed water. In particular, by use of the systematic circulation of PAC presented in the present disclosure, it is possible to keep the carbon age constant while minimizing the breakthrough of short chain PFAS.

A further advantage is that the process and system of the present invention can be fully automated. It is well suited for permanent installation for the treatment of industrial waters, but it can also be used on site as a mobile, temporary treatment system.

### Brief Description of the Drawings

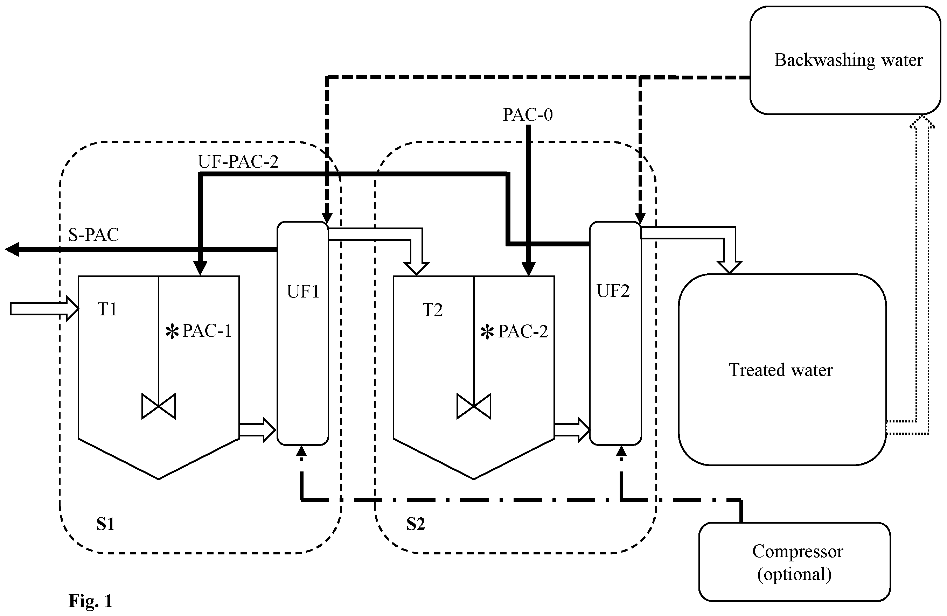

FIGURE 1 illustrates a two-stage water treatment system according to the present disclosure, wherein the system comprises two treatment stages S1, S2 arranged in series, as well as an optional air assisted backwashing system.

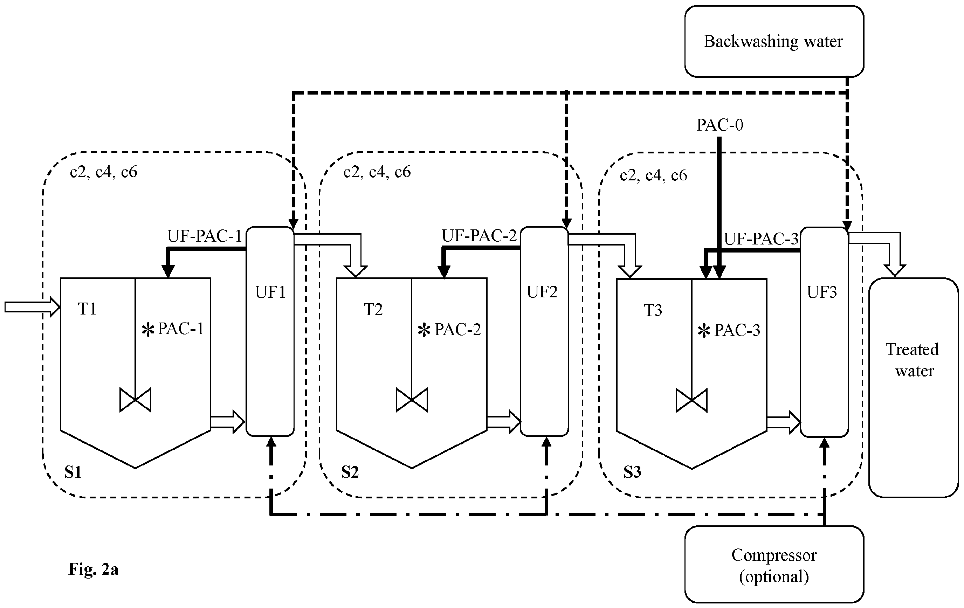

FIGURE 2a illustrates a three-stage water treatment system according to a preferred embodiment of the present disclosure operated with PAC recirculation within each treatment stage S1, S2, S3, as well as optional air assisted backwashing operation (compressor). In a preferred embodiment, the UF-captured PAC is circulated within the system once prior to being transferred upstream in the process. In such a preferred embodiment, Figure 2a represents the addition of UF-captured PAC during circulation cycles, e.g., even cycles: c2, c4 and c6 etc. The circulation cycles are carried out after the initiation cycle c1, which typically is carried out with fresh PAC added to each contacting stage. Thus, under even cycles, the contacting step of each stage is carried out with UF-captured PAC from the same stage, i.e., UF-PAC-1 in stage 1, UF-PAC-2 in stage 2, and UF-PAC-3 in stage 3.

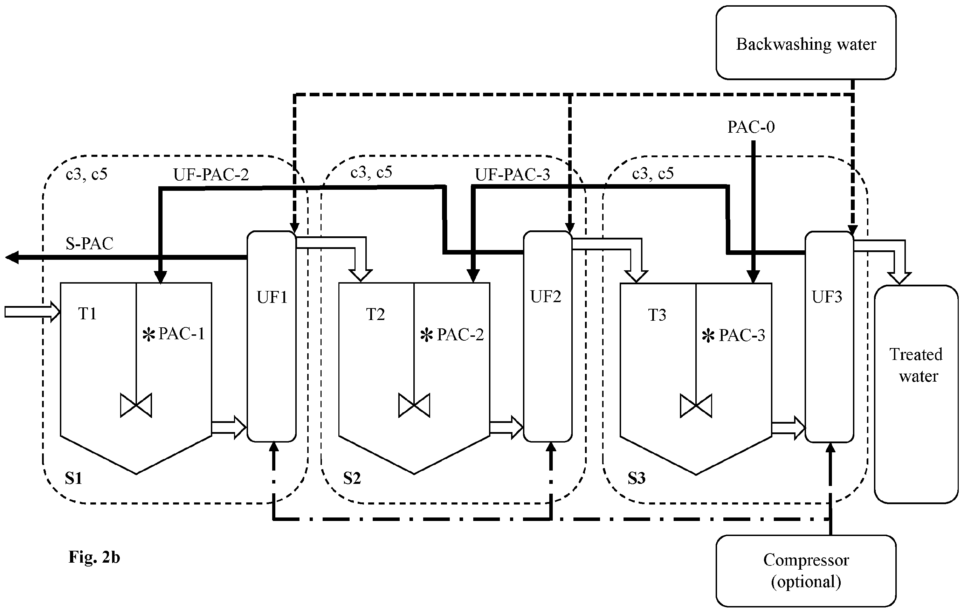

FIGURE 2b illustrates a three-stage water treatment system according to a preferred embodiment of the present disclosure, wherein the system comprises three treatment stages arranged in series, as well as optional air assisted backwashing operation. In a preferred embodiment, the UF-captured PAC is circulated within the system once prior to being transferred upstream in the process, i.e., to the previous stage. In such a preferred embodiment, Figure 2b represents the PAC addition during transfer cycles, e.g., uneven cycles c3 and c5, etc. Thereby, in Figure 2b, the contacting step of stage 2 is carried out with UF-captured PAC from stage 3 (UF-PAC-3), and the contacting step of stage 1 is carried out with UF-captured PAC from stage 2 (UF-PAC-2). The contacting step of stage 3 is carried out with fresh PAC (PAC-0). UF-captured PAC from stage 1 (UF-PAC-1) is disposed as spent PAC (S-PAC) before the initiation of the uneven cycles c3, c5 etc.
In Figure 2a and 2b it should be noted that the recycling or transfer of PAC is not necessary carried out simultaneously in all three treatment units. Depending on the system configuration, one or more of the treatment units can be empty to be able to act as receiving treatment unit for treated water separated from PAC in the previous treatment stage. Thus, for semicontinuous operation, the system can comprise parallel units not shown in the figures.

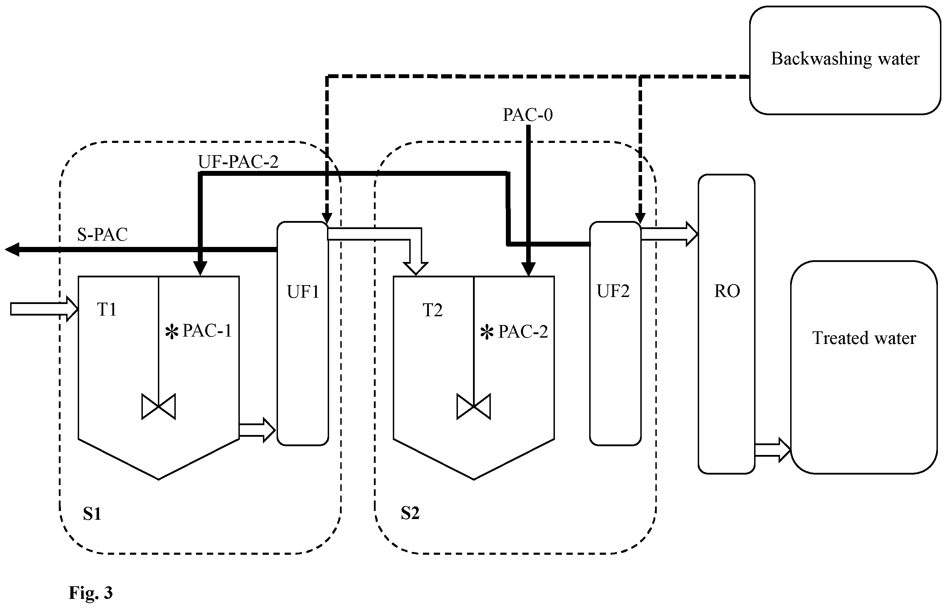

FIGURE 3 illustrates a two-stage water treatment system according to a preferred embodiment of the present disclosure, the system comprising a post treatment unit, herein illustrated as a reverse osmosis unit.

In Figures 1-3 as presented above, the water flow is illustrated with white arrows (optional recirculation with dotted line), the PAC recycling with solid black arrows, and the backwashing water and air supply with dashed arrows. The PAC recirculation and the optional air supply, as presented in Figures 2a and 2b, can independently of each other be employed in and combined with any of the systems as presented in Figures 1-3. Preferably, the system includes means for circulating PAC within the same treatment stage, such that the system is operated as presented in Figure 2a and Figure 2b.

### Embodiments of the Invention

### Definitions

In the present context, the term granular activated carbon (GAC) refers to activated carbon with a particle size in the mm range. The surface area of GAC is typically 500-800 m²/g. Typically, GAC is used in column filtration systems.

The term powder activated carbon (PAC), as used herein, refers to activated carbon with a particle size in the µm range, i.e., with an average particle size of less than 1 mm. In particular, the average particle size of PAC is 10-100 µm. The average range of the surface area for PAC is 1000-2000 m²/g. For some types of PAC, the surface area can be above 2000 m²/g.

The amount of PAC used in a treatment stage is herein provided as mass of PAC per volume of water to be treated in the specific stage.

As used herein, the term "average particle size" refers to the number average particle size based on a largest linear dimension of the particles (also referred to as "diameter") as determined using a technique known to those skilled in the art, such as Scanning Electron Microscopy, Transmission Electron Microscopy, and/or a Light Scattering technique.

As used herein, "surface area" refers to the summation of the area of the activated carbon exposed to water in the treatment process as determined using Brunauer-Emmett-Teller (BET) analysis.

Within the context of the present invention, the term ultrafiltration (UF) includes ultrafiltration carried out with ultrafiltration units of any kind, and is not limited to a specific membrane material or membrane arrangement. Commonly, ultrafiltration is carried out with membranes having a pore size ranging from 0.01-0.1 µm. Several types of ultrafiltration membranes are known in the art, such as polymeric membranes comprising, for example, polypropylene, polyvinylidene fluoride, cellulose acetate, or polysulfone, to name a few unlimiting examples. The ultrafiltration membrane can be arranged in different type of known modules, membrane arrangements, or configurations including hollow fiber membranes, spiral-wound membranes, or tubular membranes, without being limited thereto.

In the process of the present disclosure, water to be treated is subjected to a contacting step i) and an ultrafiltration step ii), which are carried out in two or more treatment stages arranged in series. Within the context of the present disclosure "cycle" refers to the number of repetition of steps i) and ii), which are carried out in the treatment stages.

The terms "upstream" and "downstream" are herein defined according to the flow direction of the water. This means that the most upstream stage is the first stage of the process, to which water to be treated is fed as feed water, and correspondingly the most downstream stage of the process is the last stage, from which treated water is recovered as purified water. An upstream stage is thereby a previous stage and a downstream stage is a subsequent stage in the water treatment process.

Per- and polyfluoroalkyl substances (PFAS) are a large class of over 10,000 different synthetic chemicals. They all contain carbon-fluorine bonds, which are one of the strongest chemical bonds in organic chemistry. There is currently no internationally agreed definition of PFAS, but in 2021 OECD (the international Organization for Economic Cooperation and Development) concluded on a PFAS definition which has gained wide acceptance. PFAS is here defined as substances that contain at least one fully fluorinated methyl group (-CF3) or fully fluorinated methylene group (-CF2-) without any hydrogen, chlorine, bromine, or iodine atom attached to it. This PFAS definition is also used by the Swedish Chemicals Agency.

Compounds belonging to the group of PFAS include both non-polymeric PFAS, such as perfluorsulfonic acids (PFSA), perfluorocarboxylic acids (PFCA), perfluoroethers, branched and/or cyclic perfluorcarbon chains, and precursors to PFSA and PFCA, as well as polymeric PFAS, such as polymers with fluorinated side-chains and fluoropolymers with a fluorinated backbone. Within the context of the present disclosure, PFAS with a chain length of 3-5 carbon atoms are considered short chain PFAS, with PFBA and PFPeA being the most demanding to separate using activated carbon, due to the lower affinity to PAC when compared to longer chain PFAS. Long-chain PFAS herein refers to PFAS compounds with a chain-length of at least 6 carbon atoms.

For the monitoring of drinking water quality, the total amount of certain PFAS compounds is measured. In Table 1 the substances belonging to PFAS11 are presented. The compounds belonging to PFAS4 are indicated with *. The recommendation of the Swedish Food Authority is that the total amount of the PFAS 11 substances is not to exceed 90 ng/L in drinking water.

**Table 1: Structures of PFAS substances belonging to PFAS11**

| **PFAS11 substances** | **Chemical name** | **Formula** | |
|---|---|---|---|
| PFBA | Perfluorobutyric acid | C₃F₇COOH | 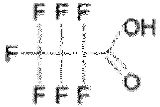 |
| PFPeA | Perfluoropentanoic acid | C₄F₉COOH | |
| PFHxA | Perfuorohexanoic acid | C₅F₁₁COOH | |
| PFHpA | Perfluoroheptanoic acid | C₆F₁₃COOH | |
| PFOA* | Perfluorooctanoic acid | C₇F₁₅COOH | |
| PFNA* | Perfluorononanoic acid | C₈F₁₇COOH | |
| PFDA | Perfluorodecanoic acid | C₉F₁₉COOH | |
| PFBS | Perfluorobutanesulfonic acid | C₄HF₉O₃S | 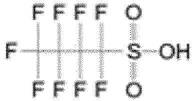 |
| PFHxS* | Perfluorohexanesulfonic acid | C₆HF₁₃O₃S | |
| PFOS* | Perfluorooctanesulfonic acid | C₈HF₁₇O₃S | |
| 6:2 FTS | 6:2-Fluorotelomersulfonic acid | C₈H₅F₁₃O₃S | 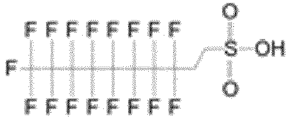 |

| | | | |
|---|---|---|---|
| *Substances belonging to the subgroup PFAS4. | | | |

The present invention concerns a water treatment process, wherein water to be treated is contacted with powder activated carbon (PAC) for removal of micropollutants. The process comprises two or more treatment stages S1, S2 arranged in series, each treatment stage S1, S2 comprising:
i) a contacting step T1, T2 wherein water to be treated is contacted with powder activated carbon PAC-1, PAC-2 to form a mixture of powder activated carbon and water, and
ii) a subsequent ultrafiltration step UF1, UF2 wherein the mixture of step i) is separated into treated water and ultrafiltration-captured powder activated carbon UF-PAC-1, UF-PAC-2,
in which process:
- water to be treated is introduced into the process as feed water supplied to the most upstream treatment stage S1,
- treated water obtained in step ii) of each treatment stage S1, S2 is transferred to step i) of a downstream treatment stage or, in the case of the most downstream treatment stage, to a step of recovering treated water,
- ultrafiltration-captured powder activated carbon UF-PAC-1, UF-PAC-2 obtained in step ii) of each treatment stage S1, S2 is transferred to step i) of an upstream treatment stage or, in the case of the most upstream treatment stage S1, to a step of removing ultrafiltration-captured powder activated carbon UF-PAC-1 from the process as spent powder activated carbon S-PAC, and
- fresh powder activated carbon PAC-0 is added to step i) of the most downstream treatment stage.

The process as presented above comprises two or more treatment stages S1, ..., SN, which are arranged in series in the flow direction of the water, wherein N represents an integer ≥ 2, such as 2 ≤ N ≤ 6. In step i) of each treatment stage, the water to be treated is contacted with PAC, which can be fresh PAC and/or UF-captured PAC, i.e., PAC already used in one or more stages of the treatment process. The current stage in the process, i.e., the stage under observation, from which treated water or UF-captured PAC is to be transferred, is represented by Sn, wherein n represents an integer with a value of 1 ≤ n ≤ N. The feed water to be treated in the process of the present disclosure is introduced into the contacting step of the most upstream treatment stage S1 of the two or more treatment stages S1, ..., SN arranged in series, i.e., the first treatment stage when any optional pre-treatment stages, such as filtration, sedimentation or flocculation, are excluded. Treated water is then transferred to a downstream treatment stage, preferably a directly downstream treatment stage Sn+1, with the exception of the most downstream treatment stage SN in the series of two or more treatment stages, from which stage SN treated water is recovered as purified water.

Thus, in the process of the present disclosure, the micropollutants will be removed from water in decreasing order of affinity to PAC, meaning that the higher affinity compounds will be adsorbed first, leaving lower affinity compounds in the water for repeated treatment in a downstream stage. This is achieved by circulating PAC in opposite direction to the water, i.e., upstream in the process. Such a process configuration will allow for water treated in one or more treatment stage to be contacted with PAC that still have adsorption capacity left, with is due to fresh PAC being added the most downstream treatment stage, thus improving the adsorption of short-chain PFAS in the downstream stages.

Because the fresh PAC added to the most downstream treatment stage will be transferred to a contacting step of an upstream stage, wherein the water has higher concentration of long-chain PFAS, the PAC will be used more than once and optimally several times before reaching saturation, without loss in quality of the recovered water. The adsorption capacity of PAC can thus be maximally utilized so that both long-chain PFAS and short-chain PFAS compounds are removed by managing the order in which short-chain and long-chain PFAS are adsorbed by PAC. Typically, the PAC can be contacted with water 3-6 times before reaching saturation. Once the PAC has been subjected to a desired number of contacting cycles, thereby optimally reaching saturation, the PAC separated in step ii) of the most upstream treatment stage, i.e., the UF-captured PAC, referred to as UF-PAC-1, will be removed from the process and corresponding system as spent PAC, referred to as S-PAC in the figures.

In preferred embodiments, the water is transferred to a directly downstream treatment stage, and the UF-captured PAC will be transferred to a directly upstream treatment stage. Transfer of water to a stage directly downstream will provide a maximum number of treatment stages, i.e., adsorption cycles, prior to contacting the water to be treated with the PAC having the highest adsorption capacity left, i.e., the PAC in the most downstream stage, thereby maximizing the adsorption of short-chain PFAS and polar substances before the purified water is recovered from the system.

Because of the majority of the competing long-chain PFAS and non-polar substances already being removed from the water in the one or more upstream stage, the adsorption rate of short-chain PFAS and polar compounds with lower affinity to PAC will improve in the downstream stages. By adding fresh PAC to the most downstream stage of the process, it will be ensured that the PAC is not allowed to reach a degree of saturation where the adsorption capacity is significantly reduced. Preferably, fresh PAC is added to the contacting unit (contacting tank) TN of the most downstream stage SN of the process at each step of transferring water from an upstream stage, hence improving the reliability of the process Thus, in Figures 1 and 3, where N=2, the fresh PAC is added to tank T2 and in Figures 2a and 2b, where N=3, to tank T3. Consequently, this will reduce the need to monitor the system and the water quality, as it will keep the PAC age constant, i.e., the total use time of PAC before being discarded, and minimize the risk of breakthrough of micropollutants, in particular short-chain PFAS.

PAC is efficient in removal of a wide range of micropollutants, and in combination with the improved adsorption scheme provided by present disclosure, the water recovered after the most downstream step is typically of a purity suitable for use as fresh water and even drinking water. Both long-chain PFAS and short-chain PFAS, as well as other pollutants, such as TOC/DOC, heavy metals, microplastics, herbicides, pesticides, pharmaceuticals, and degradation products thereof, can be efficiently removed in the process. Depending on the water quality of the feed water and the system used, it can be beneficial to subject the recovered water to one or more post-treatment stages. Such stages can be designed in particular for complementary treatment, such as for the removal of pollutants that have low affinity for PAC, or to achieve a more compact system.

The water treatment process can comprise 2, 3, 4, 5 or 6 treatment stages, without being limited thereto. In preferred embodiments, the water treatment process comprises three or more treatment stages S1, S2, S3 arranged in series. By combining three or more treatment stages, the system allows for improved separation of short-chain PFAS and improved PAC utilization. Repeated contacting steps provides for a higher degree of adsorption of micropollutants, which in turn provides for improved water quality and a higher degree of PAC utilization. Naturally, with more treatment stages the system becomes bulkier, whereby there is a balance between water quality and system size. Typically, a system with three treatment stages provides for sufficient purification results at moderate system size, meaning that it still can be used in on-site applications or mounted inside a container.

In some embodiments, the water treatment process comprises a further step, wherein treated water recovered from the most downstream treatment stage is subjected to reverse osmosis (RO). By combining the process of the present disclosure with a further treatment step, such a post-treatment, the removal efficiency of all pollutants can be increased and the removal efficiency of the outgoing water quality can be improved. Reverse osmosis is a common alternative in water treatments, but the method has some drawbacks. The process of the present disclosure can provide several benefits when used as a pre or main treatment before a reverse osmosis step. Among others, the method of the present disclosure will increase the removal efficiency of all pollutants and enhance the outgoing water quality, it will increase the RO membrane lifetime and reduce RO membrane fouling, and it will minimize the rejected wastewater from RO. The combined system of PAC treatment and RO can further reduce the carbon consumption, energy consumption and cost efficiency, it can reduce the disposal cost of used carbon and rejected wastewater, and the system is easy to automate for 24/7 operation.

The process of the present disclosure can likewise be combined with other kinds of post-treatment steps, such as nanofiltration or ion-exchange. Naturally, such a choice of post-treatment will depend on the type of pollutants present in the water to be treated.

In some embodiments of the process of the present disclosure, prior to transferring UF-captured powder activated carbon UF-PAC-1, UF-PAC-2 to an upstream treatment stage, or prior to removing spent powder activated carbon from the process, the UF-captured powder activated carbon UF-PAC-1, UF-PAC-2 obtained in step ii) is at least once circulated back to step i) of the same treatment stage S1, S2. The PAC can be circulated within the same treatment stage, for example, 1, 2, 3, 4 or 5 times. Typically, the PAC reaches saturation after 5-6 cycles, whereby the number of cycles within each stage can be selected based on the water quality and the system configuration. For example, for a system with two treatment stages, two repeated cycles can be carried out within each stage, such that the PAC in total is contacted with water to be treated 4-6 times. In a three-stage system, the same number of total contacting cycles is reached upon one repeated contacting step in each treatment stage. The aim of the PAC recirculation within the same stage is to improve the degree of utilization of the PAC before being disposed, such that it has reached saturation when being removed from the process after the contacting step of the most upstream treatment stage. When the PAC is recirculated within the treatment stage, a higher number of PAC contacting cycles can be reached without increasing the number of treatment stages, and thus the system size. The water to be treated is typically transferred to a downstream treatment stage regardless of the PAC being recycled to the same treatment stage. Thus, the recycling of PAC will have no negative impact on the total amount of purified water produced in the process, it will only provide the benefit of more efficient PAC utilization.

Preferably, fresh PAC is at each cycle added to the most downstream treatment stage of the process, so that the water always becomes contacted with at least a small amount of fresh PAC. Additionally, this addition scheme will keep the average age (total contacting time) of the PAC constant upon removal from the system, and also upon transferal between treatment stages. The fresh PAC can be dosed into each cycle such that the accumulated amount of PAC upon transferal to the upstream step is at a desired level. For example, in a system with one circulation, the amount of PAC added to the most downstream treatment stage at each cycle is half the desired amount in the upstream stage. Thus, an addition of 150 g/m³ of fresh PAC in the third treatment stage, which after step ii) is returned to step i) of the same treatment stage for repeated use together with 150 g/m³ of fresh PAC added in a subsequent cycle will lead to 300 g/m³ of PAC being transferred upstream after step ii) in the second cycle. When the PAC is recirculated twice within the same stage, the amount can be lower, for example 100 g/m³, such that the accumulated amount of PAC upon transfer is 300 g/m³. Naturally, the optimal amount of fresh PAC used will depend on the water quality of the feed water and the desired quality of the water recovered from the process.

The PAC is separated from water in step ii) by use of an ultrafiltration unit, which typically is a commercial ultrafiltration membrane, such as a polymeric membrane. The PAC can be recovered from the ultrafiltration unit by backwashing the ultrafiltration unit. In some embodiments, the UF-captured powder activated carbon UF-PAC-1, UF-PAC-2 is in step ii) recovered from an ultrafiltration unit by backwashing using gas or gaseous mixture, and water. In a backwashing process, UF-captured PAC, which has been separated from treated water in the ultrafiltration step, is removed from the ultrafiltration unit by reversing the water flow, i.e., by flushing the ultrafiltration unit with clean water in opposite direction of filtration operation. By performing the backwashing process with a blend of water and gas, or gaseous mixture, most typically a blend of water and air, the backwashing results are further improved. It was discovered that air assisted backwashing provided for improved recovery of the PAC from the ultrafiltration step and also improved adsorption capacity of the PAC, as the surface was activated by the turbulence formed between gas bubbles and water. In addition to improving the mixing rate of PAC and water, similar activation effects were observed by the use of inline mixers upon supplying PAC and water to be treated to the contacting step i). Any inline mixers and/or backwashing schemes can be used independently of each other. The UF-captured PAC that is recovered from step ii) is typically added to a contacting step i) as a mixture with the backwashing water used. A relatively small amount of backwashing water is required, such as 2-8 % of the water volume treated in the corresponding treatment stage. It should, however, be noted that this range is not limiting, as the amount of backwashing water is not bound to the total volume of the water treated in the contacting unit. For example, when a backwashing is carried out with a flow rate of 1.8 m²/h for a duration of 2 min, the volume of water added to the contacting unit together with UF-captured PAC will be around 60 L. Thus, the volume of backwashing water used in each stage and cycle can be, for example, in the range of 30-100 L.

The process of the present disclosure is preferably a semi-continuous process wherein each ultrafiltration step UF1, UF2 comprises parallel ultrafiltration units operated in an alternating manner. By operating parallel ultrafiltration units in an alternating manner, it is possible to streamline the process such that unnecessary stops can be avoided. Thus, one of the units can be used in ultrafiltration mode, simultaneously with a second unit being backwashed. Likewise, the process may comprise parallel or auxiliary contacting units or collection tanks. Such a process configuration with parallel ultrafiltration and/or contacting units allow for a semicontinuous operation, wherein feed water can be introduced into the process and system in a continuous manner, although the stages are operated as batchwise treatment stages. When the entire volume of a contacting step is treated in a batchwise manner, prior to being transferred to the next stage, it can be ensured that the PAC of the most downstream treatment stage, having the highest adsorption capacity, is contacted with water that already have a majority of high affinity, long-chain or non-polar compounds removed, thus allowing for as efficient adsorption of short-chain or polar compounds as possible.

In some embodiments, fresh PAC is additionally added to step i) of a treatment stage upstream of the most downstream treatment stage, such as to step i) of the most upstream treatment stage. In order to remove short-chain PFAS as efficiently as possible, and in order to reach as high degree of saturation of the PAC as possible upon the PAC being disposed, it is beneficial to add fresh PAC to the most downstream step of the process. Within the context of the present disclosure, it is however possible to add fresh PAC also to upstream stages and thereby adjust the system capacity according to water quality and pollutants. In order to keep the PAC consumption as low as possible, any PAC additions to upstream stages are preferably carried out in relatively low amounts, such as 50-100 g/m³. Such a process scheme would still result in a reduction of the amount of activated carbon needed when compared to alternative technologies, such as technologies employing GAC.

In some embodiments, the dosage of fresh powder activated carbon added to step i) of the most downstream treatment stage, or to step i) of an upstream treatment stage, is 50-500 g/m³. In particular in the most downstream treatment stage, the fresh PAC is typically added in slightly higher amounts, such as in the range of 100-500 g/m³, since this PAC will be the basis for the PAC treatment upstream in the process. Thus, the total amount of PAC in each stage can be in the range of, for example, from 50 g/m³, 100 g/m³, 150 g/m³ or 300 g/m³ up to 200 g/m³, 300 g/m³ or 500 g/m³. Said amounts are typically sufficient for efficient removal of micropollutants, still maintaining the PAC usage on an economical level. The amount of PAC needed in each stage naturally depends on the quality of the feed water and the type of pollutants contained therein, whereby the amount of PAC can vary outside the ranges disclosed herein. The total amount of PAC in each treatment stage is preferably within the same ranges as provided above.

In some embodiments, the contact time between water and powder activated carbon in step i) is 10-30 min. Preferably, the contact time is 10-20 min or 10-15 min. In tests carried out in the context of the present invention, it was discovered that a longer contact time did not contribute to a more efficient removal of micropollutants. In particular in the most upstream stages of the process, a contact time of around 30 minutes resulted in higher amounts of short-chain PFAS when compared to a shorter contact time of 15 min. The results indicate that some of the short-chain PFAS and polar compounds are allowed to desorb when the contact time is increased, supposedly due to adsorption competition of chemical substances on the PAC surface, whereby these are being replaced by long-chain PFAS and non-polar compounds with higher affinity to PAC. A shorter contact time than in said range can be sufficient, such as from 5-15 min, in particular when using small volumes and under mixing conditions increasing the contact surface between PAC and water.

In some embodiments, the micropollutants are one or more of polyfluoroalkyl substances (PFAS), pharmaceuticals, pesticides, microplastics, heavy metals, dissolved organic carbon (DOC) and total organic carbon (TOC), or decomposition products thereof. The aforesaid micropollutants can be present in various combinations and compositions, and can all be efficiently removed using the water treatment process of the present disclosure. In particular short-chain PFAS, such as PFBA and PFPeA, are difficult to remove using traditional treatment methods relying on activated carbon, and as PFAS are of increasing environmental concern, the process provides a valuable tool form water treatment and PFAS removal.

As noted above, one advantage of the process of the present disclosure is that it is capable of removing a wide range of pollutants. In tests carried out in the context of the present disclosure, in addition to removal of PFAS, good results were achieved for the removal of microplastics, heavy metals, and organic substances, such as polycyclic aromatic hydrocarbons (PAH). Among others, the amount of mercury and some pesticides were analyzed after recycling of PAC in the same treatment stage, with the measured percentual removal rates provided in parenthesis: mercury (82 %), aminoparathion (99.0-99.8 %), parathion (99.8-100 %), parathion-methyl (65-98 %) and sulfotep (>45 %). Compared to the feed water, it could thus be concluded that the process of the present disclosure was efficient in removal of all of the analyzed substances, and that the removal rate was not significantly affected by the recirculation.

The process of the present disclosure is preferably automized, such that it comprises monitoring of, for example, TOC/DOC, pH, conductivity and turbidity before and after adsorption to indicate the effectiveness of the adsorption system. A process with automatic sampling ensures representative samples for off-line water analysis. Furthermore, the inclusion of analysis steps will minimize the risk for breakthrough of pollutants, as the amount of PAC added can be adjusted in accordance to the water quality.

Additionally, the present invention concerns a system for water treatment, wherein the system comprises means for contacting water to be treated with powder activated carbon (PAC) for removal of micropollutants. The system comprises two or more treatment stages S 1, S2 arranged in series, each treatment stage S 1, S2 comprising:
- a contacting unit T1, T2 for contacting water to be treated with powder activated carbon PAC-1, PAC-2, the contacting unit T1, T2 comprising a mixing unit, an inlet for water to be treated, means for adding powder activated carbon PAC-1, PAC-2, and an outlet for a mixture of treated water and powder activated carbon,
- an ultrafiltration unit UF1, UF2 arranged downstream of the contacting unit T1, T2, the ultrafiltration unit UF1, UF2 comprising an inlet that is in fluid connection with the outlet of the contacting unit T1, T2 of the same treatment stage S1, S2, and an outlet that is in fluid connection with a contacting unit T2 of a downstream treatment stage or, in the case of the most downstream treatment stage, in fluid connection with a recovery unit for treated water,

- means for recovering ultrafiltration-captured powder activated carbon UF-PAC-1, UF-PAC-2 from the ultrafiltration unit UF1, UF2, and
- means for transferring the recovered ultrafiltration-captured powder activated carbon UF-PAC-2 to an upstream treatment stage S1 or, in the case of the most upstream treatment stage S1, means for removing ultrafiltration-captured powder activated carbon UF-PAC-1 from the system as spent powder activated carbon S-PAC.

The system as described above is suitable for carrying out the water treatment process of the present disclosure. The contacting unit is typically a treatment tank, which can be provided with shapes or systems for assisting emptying of the contacting unit and/or improving adsorption between water and PAC. The contacting unit is provided with a mixing unit to increase the contact between water and PAC, optimally to ensure even mixing of water and PAC throughout the water volume. The mixing unit can be any kind of mixing unit known in the art, such as rotating mixing units and mixing units based on fluid flow.

The inlet of the contacting unit T1, ..., TN is typically in fluid connection with a supply line for water to be treated, which either is feed water or water separated in the ultrafiltration unit of an upstream treatment stage. Preferably, the inlet of the contacting unit T1, ...., TN is in fluid connection with an outlet of the ultrafiltration unit in a directly upstream treatment stage Sn-1, or in the case of the most upstream treatment stage S1 with a supply line for feed water. In preferred embodiments, the means for adding PAC is an inline mixing unit, which is arranged upstream of and in fluid connection with the inlet of the contacting unit T1,..., TN. The inline mixing unit can, for example, be arranged as part of a supply line for water to be treated. An inline mixer will improve the mixing rate of water and PAC as well as generate turbulence, which improve the contacting area between water and PAC, and thus the adsorption of micropollutants. Furthermore, inline addition of PAC, such as through an inline mixer, will be preferred for safety reasons as the amount of PAC in the ambient air can be reduced, thus avoiding health concerns related to inhalation of PAC dust.

The outlet of the contacting unit T1, ..., TN is in fluid connection with the inlet of the ultrafiltration unit UF1, ..., UFN of the same treatment stage, typically through a transfer line, such that water and PAC can be separated from the mixture obtained in the contacting step. The outlet of the treatment unit is preferably arranged such that the treatment unit can be emptied from the mixture of water and PAC, either by choosing a position of the outlet in the bottom part of the treatment unit or by having the upstream end of a transfer line extending into the bottom part of the contacting unit.

The means for recovering UF-captured powder activated carbon UF-PAC-1, ..., UF-PAC-N from the ultrafiltration unit are preferably backwashing means arranged in connection with each ultrafiltration unit UF1, ..., UFN. Thus, the means for recovering UF-captured PAC can be means for backwashing the ultrafiltration membrane. Such means typically include transfer lines for guiding the recovered PAC mixed with backwashing water to a desired upstream contacting unit of the system, such as a contacting unit of a directly upstream treatment stage Sn-1. In the case of the most upstream ultrafiltration unit, the system comprises means for removing spent PAC from the system. In addition, the backwashing means can include a backwashing tank and, alternatively or additionally, means for utilizing water recovered from the last stage as backwashing water.

The water treatment system can comprise 2, 3, 4, 5 or 6 treatment stages, without being limited thereto. In preferred embodiments, the system comprises three or more treatment stages S1, S2, S3 arranged in series. A higher number of treatment stages improves the capability of the system to separate short chain PFAS, and can thus be used to achieve improved water quality of the purified water. On the other hand, the system becomes bulkier. In general, a system with three treatment stages provides for sufficient water purification results at moderate system size.

The system of the present disclosure can comprise a pre-treatment unit and/or post-treatment unit. A pre-treatment unit can be, for example, a sedimentation unit or a flocculation unit to remove suspended solid matter prior to supplying the water treatment process. The system of the present disclosure tolerates suspended solid matter well, and thus, such pre-treatment units or steps are typically not necessary. A post-treatment unit can be any kind of separation unit that is suitable for removal of pollutants still remaining in the water after the two or more treatment stages carried out. In some embodiments, the system comprises a reverse osmosis (RO) unit arranged downstream of and in fluid connection with the most downstream treatment stage of the two or more treatment stages arranged in series. RO units are commonly used in water treatment systems, but have some drawbacks, for example related to large volumes of reject water and membrane fouling. When combining a RO unit as an additional step in the system of the present disclosure, it is possible to further improve the water quality and still minimize the drawbacks, as the water fed to the RO step already have undergone two or more treatment stages, thus only containing minor amounts of pollutants.

In some embodiments, each treatment stage S1, S2 comprises means for circulating UF-captured powder activated carbon UF-PAC-1, UF-PAC-2 from the ultrafiltration unit UF1, UF2 to the contacting unit T1, T2 of the same treatment stage. By circulating the PAC to at least one repeated step of contacting water with PAC within the same contacting unit, the utilization rate of the PAC can be increased without increasing the system size. The means for circulating UF-captured PAC from the UF unit to the contacting unit can be connected with the means for transferring recovered UF-captured PAC to an upstream treatment stage, preferably a directly upstream treatment stage. Typically, the means include transfer lines for guiding the recovered PAC mixed with backwashing water to a desired contacting unit of the system, being either a contacting unit of an upstream stage or a contacting unit or the same stage. Thus, the recovered PAC can be guided to the desired unit with the use of valves located on a transfer line that is connected both to the contacting unit of the same treatment stage as well as to the contacting unit of an upstream treatment stage. The recovered PAC can be transferred or circulated to a desired unit through the means for adding PAC, such as an inline mixer.

The UF-captured PAC can be recovered from the ultrafiltration unit by backwashing, typically carried out in opposite direction of the filtration flow with fresh water from an external source or water recovered from the last treatment stage. In some embodiments, a backwashing outlet of the ultrafiltration unit UF2 is in fluid connection with the contacting unit T1 of an upstream treatment stage S1, and a backwashing outlet of the ultrafiltration unit UF1 of the most upstream treatment stage S1 is arranged such that UF-captured PAC, UF-PAC-1, can be removed from the system as spent powder activated carbon, S-PAC. In embodiments comprising recirculation to the same treatment stage, a backwashing outlet of the ultrafiltration unit UF1, UF2 is in fluid connection with the contacting unit T1, T2 of the same treatment stage. Preferably, the backwashing outlet of the ultrafiltration unit is in fluid connection with both the contacting unit of a directly upstream treatment stage Sn-1 and the contacting unit of the same treatment stage Sn, with a valve for directing the flow either to Sn or Sn-1.

In some embodiments, the system comprises means for backwashing the ultrafiltration unit using a gas or a gaseous mixture, and water. Typically, such means are means for backwashing the UF unit combined with a compressor for air supply. The inlet for gas or gaseous mixture, preferably air, is typically arranged at the bottom of the UF unit, while backwashing water can be supplied from the top, i.e., the inlet for backwashing water and the inlet for gas, or a gaseous mixture, are arranged at opposite ends of the UF unit. This configuration will allow for counterflow of gas or gaseous mixture and water within the UF unit, whereby the gas or gaseous mixture assist in releasing PAC from the UF unit while the water functions as transfer medium. Simultaneously, such a flow arrangement will cause turbulence, which additionally activates the PAC and improves its adsorption capacity.

In some embodiments, the ultrafiltration unit UF1, UF2 comprises a hollow fiber ultrafiltration membrane. Hollow fiber ultrafiltration membranes are well suited for separation and recovery of PAC from water, and the membrane system allows for a backwashing step using a mix of air, or other gaseous medium, and water. The system of the present disclosure is, however, not limited to such UF membranes. UF membranes of various kinds are suitable for use in the system, whereby the type of membrane can be chosen based on the quality of the feed water.

In some embodiments, the ultrafiltration unit UF1, UF2 comprises parallel ultrafiltration membranes arranged for semi-continuous operation. By utilizing parallel UF membranes, the ultrafiltration unit can be operated in a semi continuous manner. Likewise, parallel contacting units can be used such that the water can be fed to the system in a continuous manner, and still be treated batchwise. By batchwise treatment, the treatment cycles can be controlled, and since the water is not mixed with untreated water or water from a different treatment stage, it is also easier to adjust the dosage of PAC in accordance to the need. The risk for breakthrough of contaminants is also reduced under controlled treatment.

The system of the present disclosure is suitable for use at different locations. It can be used as a large scale, permanent installation or as an on-site water treatment system. In some embodiments, the system is an on-site water treatment system, preferably arranged within a container. Such a system has the benefit of enabling treatment on site, whereby the need for transportation of water can be reduced. The system is well suited also for permanent installations, such as for purification of industrial process waters.

The system of the present disclosure is preferably automized, such that it comprises means for system monitoring, for example means for automatic sampling and/or means for measuring TOC/DOC, pH, conductivity or turbidity. The sampling means and/or measuring means are preferably arranged before and/or after the contacting unit T1, ..., TN to indicate the effectiveness of the adsorption system.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The following non-limiting examples are intended merely to illustrate the advantages obtained with the embodiments of the present invention.

### EXAMPLES

### Example 1: Water treatment with upstream PAC transfer

The quality of the water treated in a system according to the present disclosure was evaluated in tests carried out with three treatment stages and under three cycles. Each treatment stage comprised a contacting unit (contacting tank) with a mixing unit and an ultrafiltration unit arranged downstream of the treatment tank. The quality of the water separated in the ultrafiltration unit was analyzed after each stage and cycle, i.e., after each contacting and ultrafiltration step performed. The contacting time at each stage was 30 min.

The treatment process was initiated by supplying feed water to stage 1, in which it was contacted with 200 g/m³ of fresh PAC (PAC-1). The treated water that was separated from PAC-1 in the ultrafiltration unit was transferred to stage 2, in which it was contacted with fresh PAC in an amount of 200 g/m³ (PAC-2). The water thus treated in stage 1 and 2 was after the ultrafiltration step of stage 2 transferred to stage 3, in which the water was contacted with fresh PAC in an amount of 150 g/m³ (PAC-3) and recovered after the subsequent ultrafiltration step. Thereby, at the initiation of the process (corresponding to cycle 1) the feed water underwent three contacting steps using fresh PAC. The results from the third stage of the first cycle thus represents test results for water treated without recycled PAC, and can thereby be seen as an example carried out with PAC having as high adsorption capacity as possible. Correspondingly, the results of cycle 1 and stage 1 represents a single treatment stage using one dose of PAC, which thus could represent results for current state of the art processes carried out in a single contacting stage and without PAC recycling.

Once the water had been transferred from the contacting unit of stage 1 to the contacting unit of stage 2, the second cycle was initiated by supplying new feed water into the contact unit of stage 1 and by adding UF-captured PAC (UF-PAC-1) separated from the water treated in cycle 1 of stage 1. After treatment in cycle 2 of stage 1, the water was transferred to stage 2 where it was contacted with UF-captured PAC (UF-PAC-2) recovered from cycle 1 of stage 2, etc. Thus, the results of cycle 2 represents results for water that in each stage has been contacted with UF-captured PAC used once before in the same stage. This means that although the PAC of stage 3 (PAC-3) has been recirculated once, it has only been contacted with water that already have underwent two treatment stages and have most of the micropollutants with high affinity to PAC removed (e.g. long-chain PFAS). When the water treated in stage 2 of cycle 2 had been transferred to stage 3, the UF-captured PAC of stage 2 in cycle 2 was transferred to stage 1 and contacted with new feed water, thus initiating the treatment of cycle 3 in stage 1. Likewise, after recovering the treated water separated from UF-captured PAC after cycle 2 of stage 3, the UF-captured PAC was transferred to cycle 3 of stage 2. Once the water from cycle 3 of stage 2 reached stage 3, it was contacted with 150 g/m³ of fresh PAC. Thus, the quality of the water leaving stage 2 in cycle 3 represent the results of a two-stage system for treating feed water with upstream circulation, and the difference in the results between stages 2 and 3 in cycle 3 illustrates the removal of short chain PFAS when a third treatment stage is used, meaning that the water already has been contacted twice with PAC.

After cycle 3, the water separated from PAC in stage 1 has been treated with PAC transferred from stage 2 after one repeated cycle (i.e., used three times), and the water separated from the PAC in stage 2 has been treated with PAC transferred from stage 3, whereof 150 g/m³ have been used once and 150 g/m³ have been used twice in stage 3, prior to the treatment in step 2. Thereby, the PAC separated from water in cycle 3 of stage 2 was a mix of PAC used two times and PAC used three times. The water separated from PAC in stage 3 has been treated once with 150 g/m³ of fresh PAC. The results of the third cycle thus represents an embodiment of the invention wherein PAC has been recycled both within each treatment stage and upstream in the process.

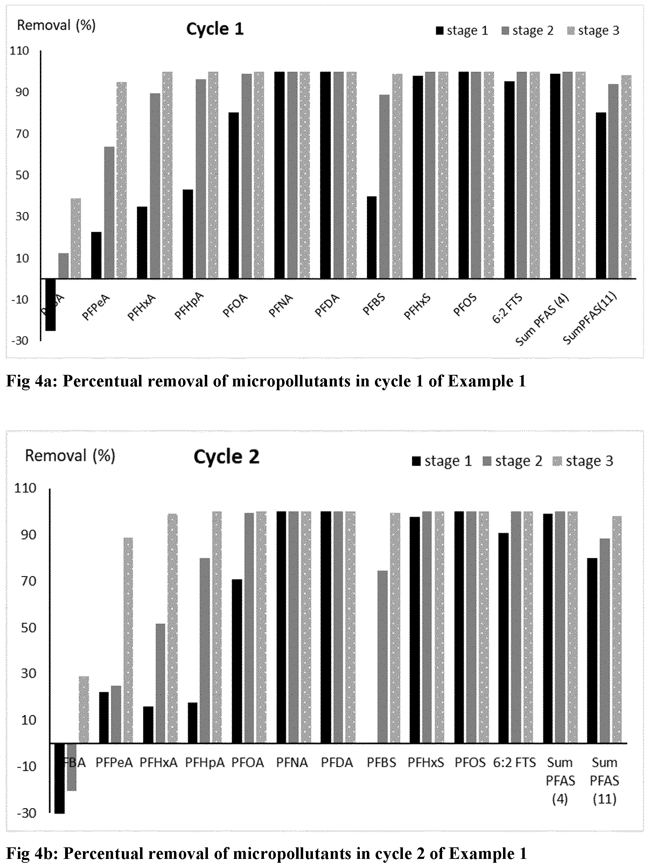

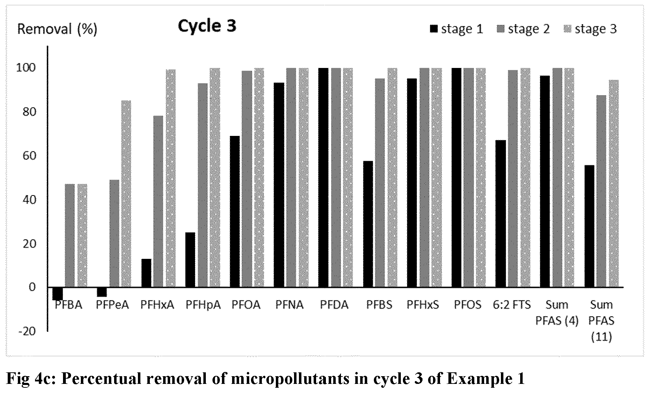

Tables 2-4 represent the treated water quality for PFAS, DOC, and BOD over three treatment stages across three cycles. The analysis of the PFAS 11 compounds were carried out using liquid chromatography and tandem mass spectrometry (HPLC-MS/MS). The results of cycle 1, representing results for water with fresh PAC, are presented in table 2. The results after cycle 2 with recycling of PAC within the same stage are presented in table 3. The results of cycle 3, representing results for water with upstream recycled PAC in stages 1 and 2 are presented in Table 4. The percentual removal of micropollutants of each cycle is presented in Figures 4a, 4b and 4c. Because the quality of the feed water varies between the test series carried out for cycle 1, cycle 2 and cycle 3, these figures illustrate the efficiency of the process in a comparable manner.

**Table 2: PFAS analysis results of first cycle (fresh PAC in all stages)**

| **Substances** | **Unit** | **Feed water** | **Stage 1** | **Stage 2** | **Stage 3** |
|---|---|---|---|---|---|
| DOC | mg/l | 18 | 11 | 6.3 | 5.5 |
| BOD | mg/l | 7 | 5 | 4 | 5 |
| PFBA | ng/l | 72 | 90 | 63 | 44 |
| PFPeA | ng/l | 220 | 170 | 80 | 11 |
| PFHxA | ng/l | 230 | 150 | 24 | 0.64 |
| PFHpA | ng/l | 67 | 38 | 2.6 | <0.30 |
| PFOA | ng/l | 71 | 14 | 0.82 | <0.30 |
| PFNA | ng/l | <10 | <0.30 | <0.30 | <0.30 |
| PFDA | ng/l | <10 | <0.30 | <0.30 | <0.30 |
| PFBS | ng/l | 200 | 120 | 22 | 2.2 |
| PFHxS | ng/l | 250 | 5.5 | <0.30 | <0.30 |
| PFOS | ng/l | 1300 | 0.36 | <0.2 | <0.2 |
| 6:2 FTS | ng/l | 740 | 36 | 2.1 | <0.3 |
| **Sum PFAS4** | ng/l | 1600 | 20 | 0.82 | ND |
| **Sum PFAS11** | ng/l | 3200 | 630 | 190 | 58 |

**Table 3:**

| **PFAS analysis results after second cycle (recirculation of PAC within each stage)** | | | | | |
|---|---|---|---|---|---|
| **Substances** | **Unit** | **Feed water** | **Stage 1** | **Stage 2** | **Stage 3** |
| DOC | mg/l | 16 | 12 | 8.4 | 3.9 |
| BOD | mg/l | 6 | 4 | 6 | < 3.0 |
| PFBA | ng/l | 83 | 110 | 100 | 59 |
| PFPeA | ng/l | 360 | 280 | 270 | 40 |
| PFHxA | ng/l | 310 | 260 | 150 | 3.3 |
| PFHpA | ng/l | 90 | 74 | 18 | <0.30 |
| PFOA | ng/l | 79 | 23 | 0.56 | <0.30 |
| PFNA | ng/l | <10 | 0.42 | <0.30 | <0.30 |
| PFDA | ng/l | <10 | <0.30 | <0.30 | <0.30 |
| PFBS | ng/l | 130 | 130 | 33 | 1 |
| PFHxS | ng/l | 330 | 8.2 | <0.30 | <0.30 |
| PFOS | ng/l | 2300 | 0.2 | <0.2 | <0.20 |
| 6:2 FTS | ng/l | 1300 | 120 | 1.8 | <0.30 |
| **Sum PFAS4** | ng/l | 2700 | 32 | 0.56 | ND |
| **Sum PFAS11** | ng/l | 5000 | 1000 | 570 | 100 |

**Table 4: PFAS analysis results for the third cycle (recycled PAC in stage 1 and 2)**

| **Substances** | **Unit** | **Feed water** | **Stage 1** | **Stage 2** | **Stage 3** |
|---|---|---|---|---|---|
| DOC | mg/l | 16 | 14 | 8 | 4.5 |
| BOD | mg/l | 5 | < 3.0 | < 3.0 | < 3.0 |
| PFBA | ng/l | 340 | 360 | 180 | 180 |
| PFPeA | ng/l | 470 | 490 | 240 | 70 |
| PFHxA | ng/l | 380 | 330 | 83 | 3 |
| PFHpA | ng/l | 120 | 90 | 8.7 | <0.30 |
| PFOA | ng/l | 120 | 37 | 1.6 | <0.30 |
| PFNA | ng/l | 8.2 | 0.55 | <0.30 | <0.30 |
| PFDA | ng/l | 2.1 | <0.30 | <0.30 | <0.30 |
| PFBS | ng/l | 990 | 420 | 49 | 1.5 |
| PFHxS | ng/l | 280 | 14 | <0.30 | <0.30 |
| PFOS | ng/l | 970 | 0.22 | <0.20 | <0.20 |
| 6:2 FTS | ng/l | 790 | 260 | 7.6 | <0.30 |
| **Sum PFAS4** | ng/l | 1400 | 52 | 1.6 | ND |
| **Sum PFAS11** | ng/l | 4500 | 2000 | 570 | 250 |

From the results in Tables 2-4 it can be seen that all cycles showed good results in the removal of PFAS, and for the long-chain or non-polar substances, such as PFNA, PFDA, PFHxS, PFOA and PFOS, the results were good even after one treatment stage. The results illustrates that these long-chain or non-polar substances will adsorb efficiently to the PAC, whereby they can be removed using a single treatment stage. However, the removal rate of the short-chain or polar substances, such as PFBA and PFPeA, was improved significantly with two or more treatment stages. From the results presented in Tables 4-6 and Figures 4a-4c it can further be seen that the concentration of PFBA and PFPeA even slightly increased in the first stage, which likely is due to desorption of PFBA and PFPeA from PAC transferred from the downstream treatment stages, due to the adsorption competition with long-chain PFAS and other pollutants. A repeated cycle within the same treatment stage slightly weakened the removal of short chain or polar PFAS compounds within that specific stage, likely due to part of the capacity of the PAC being used in the previous cycle. However, the circulation within the same stage had no negative effect on the removal of short chain or polar PFAS in the following downstream stage, i.e., the removal efficiency of, for example, stage 3 in cycle 2 is comparable to the removal efficiency of stage 3 in cycle 3. Thus, based on the results the repeated cycle allowed for some desorption of lower affinity compounds back into the water. However, since the water was fed downstream in the process, regardless of the PAC being recycled within the same stage, the desorbed short-chain PFAS would be adsorbed again in stage 2 or 3, prior to the recovery of clean water.

In summary, the results showed that the percentual removal of both short-chain PFAS and long-chain PFAS remained on a similar level despite the recirculation of PAC. Since the recirculation of PAC did not have a significant negative impact on the overall results, it could be concluded that the process provides the benefit of being able to utilize the full adsorption capacity of the PAC and thus provide for a more economic process. Thus, by the process of the present disclosure, it is possible to keep the carbon age constant while minimizing the breakthrough of short chain PFAS.

### Example 2: Recirculation of PAC

The adsorption capacity of PAC was evaluated by recirculation of PAC, both within the same treatment stage and to upstream treatment stages. PAC and treated water were separated in the ultrafiltration stage, and thereafter the PAC was either reintroduced into the same treatment stage for repeated adsorption of pollutants or transferred to an upstream treatment stage, depending on the cycle. The treated water separated in the ultrafiltration step was at every cycle transferred downstream in the process.

The tests of Example 2 were carried out in a system with three treatment stages in series. The system used thus corresponds to a system as presented in Figure 2a and Figure 2b.

At the initiation of the process, 200 g/m³ of PAC was introduced into the first and second treatment stage, respectively. To the third treatment stage, 150 g/m³ of PAC was added. Water and PAC was in each treatment stage mixed under a contact time of 30 min before the mix of water and PAC was fed to respective UF step. The UF membranes used in the tests were outside-in feed, hollow fiber, polyvinylidene fluoride (PVDF) ultrafiltration membranes. The mixture of water and PAC was fed from each treatment tank to the ultrafiltration unit with a flow rate of 2.0 m³/h. UF-captured PAC was recovered after each ultrafiltration step by backflushing using a flow rate of 1.8 m³/h, and recirculated once within the same treatment stage. At this second cycle, representing a second treatment with PAC used once, 150 g/m³ of fresh PAC was added to the third treatment stage. With this configuration, in each treatment stage, the PAC underwent two adsorption cycles prior to the UF-captured PAC being transferred upstream in the process.

After two cycles in the same treatment stage, UF-captured PAC separated in the first treatment stage was disposed as spent PAC, UF-captured PAC separated in the second treatment stage was transferred to the first treatment stage, and UF-captured PAC separated in the third treatment stage was transferred to the second treatment stage. Fresh PAC was added to the third treatment stage in an amount of 150 g/m³, which constituted the total amount of PAC in that cycle, prior to addition of another 150 g/m³ in the next cycle. After four cycles with this circulation scheme, the initial PAC added to step 1 and 2 was removed from the process, whereby the amount of PAC in stage 1 and 2 was 300 g/m³ during cycles 5 and 6, as 150 g/m³ of PAC was added to the third stage in each cycle, and the combined amount of 300 g/m³ is transferred to an upstream step after two cycles. Thus, after four cycles, the only addition of fresh PAC is to the most downstream stage at each cycle, all other steps are carried out with UF-captured PAC from a downstream stage. The results from cycle 5 and 6 are thus results representing a continuous process. Each dose of PAC is thereby used 5-6 times (depending on the cycle of addition) before being discarded. The recirculation scheme is presented in Table 5, wherein PAC-0 represents fresh PAC.

The water separated from UF-captured PAC in the third stage of each cycle was analyzed using HPLC-MS/MS and the results for different pollutants are presented in Table 6 (PFAS), Table 7 (heavy metals), Table 8 (microplastics) and Table 9 (organic substances).

**Table 5: Recirculation scheme of PAC**

| **Cycle** | **Stage 1** | **Stage 2** | **Stage 3** |
|---|---|---|---|
| **1** | PAC-1 (cycle 1): | PAC-2 (cycle 1): | PAC-3 (cycle 1): |
| | 200 g/m³ fresh PAC | 200 g/m³ fresh PAC | 150 g/m³ fresh PAC |
| **2** | PAC-1 (cycle 2): | PAC-2 (cycle 2): | PAC-3 (cycle 2): |
| | 200 g/m³ UF-captured | 200 g/m³ UF-captured | 150 g/m³ UF-captured |
| | PAC-1 from cycle 1 | PAC-2 from cycle 1 | PAC-3 from cycle 1 150 g/m³ fresh PAC-0 |
| | *UF-captured PAC-1 disposed as spent PAC after cycle 2* | *UF-captured PAC-2 transferred from cycle 2 to stage 1* | *UF-captured PAC-3 transferred from cycle 2 to stage 2* |
| **3** | PAC-1 (cycle 3): | PAC-2 (cycle 3): | PAC-3 (cycle 3): |
| | 200 g/m³ UF-captured | 300 g/m³ UF-captured | 150 g/m³ fresh PAC-0 |
| | PAC-2 from cycle 2 | PAC-3 from cycle 2 | |
| **4** | PAC-1 (cycle 4): | PAC-2 (cycle 4): | PAC-3 (cycle 4): |
| | 200 g/m³ UF-captured | 300 g/m³ UF-captured | 150 g/m³ UF-captured |
| | PAC-1 from cycle 3 | PAC-2 from cycle 3 | PAC-3 from cycle 3 150 g/m³ fresh PAC-0 |
| | *UF-captured PAC-1 disposed as spent PAC after cycle 4* | *UF-captured PAC-2 transferred from cycle 4 to stage 1* | *UF-captured PAC-3 transferred from cycle 4 to stage 2* |
| **5** | PAC-1 (cycle 5): | PAC-2 (cycle 5): | PAC-3 (cycle 5): |
| | 300 g/m³ UF-captured | 300 g/m³ UF-captured | 150 g/m³ fresh PAC-0 |
| | PAC-2 from cycle 4 | PAC-3 from cycle 4 | |
| **6** | PAC-1 (cycle 6): | PAC-2 (cycle 6): | PAC-3 (cycle 6): |
| | 300 g/m³ UF-captured | 300 g/m³ UF-captured | 150 g/m³ UF-captured |
| | PAC-1 from cycle 5 | PAC-2 from cycle 5 | PAC-3 from cycle 5 150 g/m³ fresh PAC-0 |
| | *UF-captured PAC-1 disposed as spent PAC after cycle 6* | *UF-captured PAC-2 transferred from cycle 6 to stage 1* | *UF-captured PAC-3 transferred from cycle 6 to stage 2* |

**Table 6: Analysis results for PFAS substances and DOC/TOC**

| **PFAS Substances** | **Unit** | **Feed water** | **Cycle No.** | | | | | |
|---|---|---|---|---|---|---|---|---|
| | | | **1** | **2** | **3** | **4** | **5** | **6** |
| DOC | mg/l | 13 | 5.5 | 2.9 | 3.2 | 3.9 | 4.3 | 3.9 |
| TOC | mg/l | 14 | 5.2 | 3.3 | 3.4 | 4 | 3.7 | 3.8 |
| PFBA | ng/l | 190 | 56 | 96 | 120 | 140 | 130 | 140 |
| PFPeA | ng/l | 280 | 1.8 | 6.4 | 10 | 30 | 15 | 18 |
| PFHxA | ng/l | 280 | 0.75 | <0.30 | <0.30 | 1 | 0.43 | 0.47 |
| PFHpA | ng/l | 91 | <0.30 | <0.30 | <0.30 | <0.30 | <0.30 | <0.30 |
| PFOA | ng/l | 88 | 0.4 | <0.30 | <0.30 | <0.30 | <0.30 | <0.30 |
| PFNA | ng/l | <10 | <0.3 | <0.30 | <0.30 | <0.30 | <0.30 | <0.30 |
| PFDA | ng/l | <10 | <0.3 | <0.30 | <0.30 | <0.30 | <0.30 | <0.30 |
| PFBS | ng/l | 1000 | 4.8 | 2.8 | 1.2 | 0.93 | 1.2 | 0.89 |
| PFHxS | ng/l | 200 | <0.3 | <0.3 | <0.3 | <0.3 | <0.3 | <0.3 |
| PFOS | ng/l | 540 | <0.2 | <0.2 | <0.2 | <0.2 | <0.2 | <0.2 |
| 6:2 FTS | ng/l | 310 | 1.2 | 0.59 | <0.3 | <0.3 | <0.3 | <0.3 |
| Sum of PFAS11 | ng/l | 3000 | 65 | 110 | 130 | 170 | 150 | 160 |
| Sum of PFAS4 | ng/l | 830 | 0.4 | ND | ND | ND | ND | ND |

The results presented in Table 6 confirms that in the presence of long-chain PFAS, the removal of short-chain PFAS, and in particular PFBA and PFPeA, is demanding. However, upon repeated recycling of PAC, the removal rate stabilized, indicating that repeated recycling of PAC had no significant negative effect on the results and that the PAC in this way could be used until reaching saturation. When compared to the results of stage 1 in Table 2, it can be concluded that using two or more stages will have a positive impact on the separation of short chain PAC, regardless of PAC being recycled. Furthermore, it can be noted that the contacting time between PAC and water was relatively long in the tests (30 min), which can allow for a higher degree of desorption of short-chain PFAS when compared to shorter contacting times. The results for TOC and BOD were either improved or remained at the same level with used PAC, such as in cycles 5 and 6. In all cycles, the results for TOC and BOD were significantly improved when compared to the feed water.

**Table 7: Analysis results for heavy metals**

| **Heavy metals** | **Unit** | **Feed water** | **Cycle 1** | **Cycle 6** |
|---|---|---|---|---|
| Pb | mg/l | 0.042 | 0.014 | 0.033 |
| Cd | mg/l | 0.00036 | 0.00025 | 0.00011 |
| Cu | mg/l | 0.0089 | 0.0063 | 0.019 |
| Co | mg/l | 0.0052 | 0.0035 | 0.0057 |
| Cr | mg/l | 0.0017 | 0.00095 | < 0.00050 |
| Ni | mg/l | 0.1 | 0.069 | 0.094 |
| Zn | mg/l | 0.05 | 0.03 | 0.035 |

Heavy metals can be efficiently removed by the use of PAC, which was confirmed by the heavy metal analysis of the samples at the end of cycle 1 and cycle 6. The results from cycle 1 are measured at the initiation of the process, wherein fresh PAC is added to each stage. The results shows that the heavy metal removal was more efficient in cycle 1 than in cycle 6, in particular for lead (Pb), copper (Cu), cobalt (Co) and nickel (Ni). The removal of cadmium (Cd) and chrome (Cr) improved with recycling of PAC, and the removal of zinc (Zn) was not remarkedly affected.

From the results it can be concluded that in general, the system of the present disclosure performs well for removal of heavy metals. The treatment can be further optimized for a certain heavy metal pollutant by adding fresh PAC also to a downstream stage, such as either one of stage 1 and 2.

**Table 8: Analysis results for microplastics**

| **Microplastics** | **Unit** | **Feed water** | **Cycle 1** | **Cycle 6** |
|---|---|---|---|---|
| Polypropylene | µg/l | 67 | 7.4 | 0.9 |
| Plastic polymers (sum) | µg/l | 67 | 7.7 | 0.9 |

The analysis results for microplastics, being almost exclusively polypropylene in the water sample, indicated that microplastics could be efficiently removed by the process of the present disclosure.

**Table 9: Analysis results for organic substances**

| **Organic substances** | **Unit** | **Feed water** | **Cycle 1** | **Cycle 6** |
|---|---|---|---|---|
| Naphthalene | ng/l | 42 | <3.0 | <3.0 |
| Acenaphthylene | ng/l | 6.4 | <1.0 | <1.0 |
| Acenaphthene | ng/l | 12 | <1.0 | <1.0 |
| Fluorene | ng/l | 15 | <1.0 | <1.0 |
| Phenanthrene | ng/l | 7.6 | <1.0 | <1.0 |
| Anthracene | ng/l | 2 | <1.0 | <1.0 |
| Sum PAH16 | ng/l | 89 | 8 | 8 |
| Sum of other PAH compounds | ng/l | 87 | <5.5 | <5.5 |
| Sum of low molecular weight PAH | ng/l | 60 | <2.5 | <2.5 |
| Sum of medium molecular weight PAH | ng/l | 26 | <2.5 | <2.5 |
| Oil index | mg/l | 0.17 | < 0.10 | < 0.10 |
| Cyanide | µg/l | 0.86 | <0.50 | <0.50 |

The analysis results for organic substances indicated that these could be efficiently removed and that the recycling of PAC had no negative impact on the system performance.

### Example 3 - Contact time

The influence of the contact time between water and PAC on the removal of micropollutants was evaluated by analyzing the presence of eleven PFAS compounds in water purified in a system including three treatment stages. One cycle was carried out using fresh PAC and the water was analyzed after the third stage. The PAC dosage was 200 g/m³ PAC for treatment stage 1 and treatment stage 2, and 150 g/m³ PAC for treatment stage 3. The PFAS concentration was measured in raw water that was fed to the process and compared to the results for the raw water that had been contacted with PAC in three test series, wherein the contact time in all three stages of each test series was 10 min, 15 min, and 30 min, respectively. The results are presented in Table 10.

**Table 10: Effect of the contact time on the water purity**

| **Substances** | **Unit** | **Raw water** | **10 min** | **15 min** | **30 min** |
|---|---|---|---|---|---|
| DOC | mg/l | 16 | 120 | 110 | 610 |
| PFBA | ng/l | 260 | 250 | 260 | 320 |
| PFPeA | ng/l | 390 | 40 | 42 | 81 |
| PFHxA | ng/l | 320 | <0.30 | <0.30 | <0.30 |
| PFHpA | ng/l | 97 | <0.30 | <0.30 | <0.30 |
| PFOA | ng/l | 110 | <0.30 | <0.30 | <0.30 |
| PFNA | ng/l | <10 | <0.30 | <0.30 | <0.30 |
| PFDA | ng/l | <10 | <0.30 | <0.30 | <0.30 |
| PFBS | ng/l | 1300 | 1.2 | 1.1 | 0.77 |
| PFHxS | ng/l | 270 | <0.30 | <0.30 | <0.30 |
| PFOS | ng/l | 840 | 0.42 | <0.20 | <0.20 |
| 6:2 FTS | ng/l | 540 | <0.30 | <0.30 | <0.30 |
| **Sum PFAS4** | ng/l | 1200 | 0.2 | ND | ND |
| **Sum PFAS11** | ng/l | 4100 | 290 | 300 | 400 |

In the tests, it was found that a longer contact time did not increase the removal rate of PFAS 11 compounds as listed in Table 10, on the contrary, an increase for PFBA and PFPeA could be noticed at a contact time of 30 min. This increase in PFBA can indicate desorption of PFBA after a mixing time of 20-25 min, or potentially degradation of long-chain PFAS into short chain PFAS. Thereby, based on the results, a contact time of 10-20 min is preferred for removal of short-chain PFAS, and sufficient for removal of a wide range micropollutants.

### Example 4: Fresh and spent PAC characterization

Fresh PAC was added to water to be treated in an amount of 250 g PAC/m³. The mixture of water and PAC was filtered in an ultrafiltration unit, and the UF-captured PAC was recovered by backwashing the unit. The UF unit used in the tests was an outside-in feed, hollow fiber, polyvinylidene fluoride (PVDF) ultrafiltration membrane, and the backwash was carried out with air supply in a system according to Figure 2. The UF-captured PAC was in the backwashing step collected, dried and weighed. The dried PAC was recovered from the UF unit in an amount of 250 g, corresponding to a recovery rate of 100 %. It could thus be concluded that the ultrafiltration system was very efficient in separating PAC from water, allowing no PAC to transfer to the treated water. Because the full amount of PAC could be recovered from the ultrafiltration unit, it could be concluded that the PAC was very efficiently released from the UF unit in the air assisted backwashing process.

The adsorption capacity of fresh PAC and spent PAC, i.e. UF-captured PAC that had underwent five treatment cycles, was measured by determining the Brunauer-Emmett-Teller (BET) surface area, the total pore volume, the micropore volume and the mesopore volume. The results that are presented in Table 11 show that the PAC reached saturation after performing five cycles, i.e., after being contacted with water to be treated five times.

**Table 11: Characterization of PAC after five cycles (PAC dosage 250 g/m³)**

| | BET surface area (m2/g) | Total pore volume (cm³/g) | Micropore volume (cm³/g) | Mesopore volume (cm³/g) |
|---|---|---|---|---|
| Fresh PAC | 1117.75 | 0.646 | 0.185 | 0.461 |
| Spent PAC (after 5 cycles) | 103.576 | 0.11669 | -0.010180 | 0.1065 |

### Industrial Applicability

The process and system of the present disclosure can be used for water treatment, both in permanently installed large scale systems and in on-site systems suitable for temporary water purification. The process of the system of the present invention is suitable for removal of a wide range of micropollutants, and can thus be utilized to replace conventional water treatment systems. For example, the system can be used in treatment of industrial effluent streams.

In particular, the process and system of the present invention provides a cost-effective treatment system, where the full adsorption capacity of powder activated carbon can be utilized to remove also more demanding compounds, such as short chain PFAS.

### Reference Signs List

- c1, c2, c3: Cycles
- PAC-0: Fresh powder activated carbon
- PAC-1, PAC-2, PAC-3: Powder activated carbon (UF-captured and/or fresh PAC)
- UF-PAC-1, UF-PAC-2, UF-PAC-3: Ultrafiltration-captured powder activated carbon
- S-PAC: Spent powder activated carbon
- S1, S2, S3: Treatment stages
- T1, T2, T3: Contacting units/tanks
- UF 1, UF2, UF3: Ultrafiltration units

## Claims

1. A water treatment process, wherein water to be treated is contacted with powder activated carbon (PAC) for removal of micropollutants, **characterized in that** the process comprises two or more treatment stages (S1, S2) arranged in series, each treatment stage (S1, S2) comprising:
iii) a contacting step (T1, T2) wherein water to be treated is contacted with powder activated carbon (PAC-1, PAC-2) to form a mixture of powder activated carbon and water, and
iv) a subsequent ultrafiltration step (UF1, UF2) wherein the mixture of step i) is separated into treated water and ultrafiltration-captured powder activated carbon (UF-PAC-1, UF-PAC-2),
in which process:
- water to be treated is introduced into the process as feed water supplied to the most upstream treatment stage (S1),
- treated water obtained in step ii) of each treatment stage (S1, S2) is transferred to step i) of a downstream treatment stage or, in the case of the most downstream treatment stage, to a step of recovering treated water,
- ultrafiltration-captured powder activated carbon (UF-PAC-1, UF-PAC-2) obtained in step ii) of each treatment stage (S1, S2) is transferred to step i) of an upstream treatment stage or, in the case of the most upstream treatment stage (S1), to a step of removing ultrafiltration-captured powder activated carbon (UF-PAC-1) from the process as spent powder activated carbon (S-PAC), and
- fresh powder activated carbon (PAC-0) is added to step i) of the most downstream treatment stage.

2. The water treatment process of claim 1, **characterized in that** the water treatment process comprises three or more treatment stages (S1, S2, S3) arranged in series.

3. The water treatment process of any of the preceding claims, **characterized in that** the water treatment process comprises a further step, wherein treated water recovered from the most downstream treatment stage is subjected to reverse osmosis (RO).

4. The water treatment process of any of the preceding claims, **characterized in that** prior to transferring ultrafiltration-captured powder activated carbon (UF-PAC-1, UF-PAC-2) to an upstream treatment stage, or prior to removing spent powder activated carbon from the process, the ultrafiltration-captured powder activated carbon (UF-PAC-1, UF-PAC-2) obtained in step ii) is at least once circulated back to step i) of the same treatment stage (S1, S2).

5. The water treatment process of any of the preceding claims, **characterized in that** the ultrafiltration-captured powder activated carbon (UF-PAC-1, UF-PAC-2) is in step ii) recovered from an ultrafiltration unit by backwashing using gas or gaseous mixture, and water.

6. The water treatment process of any of the preceding claims, **characterized in that** the dosage of fresh powder activated carbon added to step i) of the most downstream treatment stage, or to step i) of an upstream treatment stage, is 50-500 g/m³.

7. The water treatment process of any of the preceding claims, **characterized in that** the contact time between water and powder activated carbon in step i) is 10-30 min.

8. The water treatment process of any of the preceding claims, **characterized in that** the micropollutants are one or more of polyfluoroalkyl substances (PFAS), pharmaceuticals, pesticides, microplastics, heavy metals, dissolved organic carbon (DOC) and total organic carbon (TOC), or decomposition products thereof.

9. System for water treatment, wherein the system comprises means for contacting water to be treated with powder activated carbon (PAC) for removal of micropollutants, **characterized in that** the system comprises two or more treatment stages (S1, S2) arranged in series, each treatment stage (S1, S2) comprising:
- a contacting unit (T1, T2) for contacting water to be treated powder activated carbon (PAC-1, PAC-2), the contacting unit (T1, T2) comprising a mixing unit, an inlet for water to be treated, means for adding powder activated carbon (PAC-1, PAC-2), and an outlet for a mixture of treated water and powder activated carbon,
- an ultrafiltration unit (UF1, UF2) arranged downstream of the contacting unit (T1, T2), the ultrafiltration unit (UF1, UF2) comprising an inlet that is in fluid connection with the outlet of the contacting unit (T1, T2) of the same treatment stage (S1, S2), and an outlet that is in fluid connection with a contacting unit (T2) of a downstream treatment stage or, in the case of the most downstream treatment stage, in fluid connection with a recovery unit for treated water,
- means for recovering ultrafiltration-captured powder activated carbon (UF-PAC-1, UF-PAC-2) from the ultrafiltration unit (UF1, UF2), and
- means for transferring the recovered ultrafiltration-captured powder activated carbon (PAC-UF2) to an upstream treatment stage (S1) or, in the case of the most upstream treatment stage (S1), means for removing ultrafiltration-captured powder activated carbon (UF-PAC-1) from the system as spent powder activated carbon (S-PAC).

10. The system according to claim 9, **characterized in that** the system comprises three or more treatment stages (S1, S2, S3) arranged in series.

11. The system according to any one of claims 9-10, **characterized in that** the system comprises a reverse osmosis (RO) unit arranged downstream of and in fluid connection with the most downstream treatment stage.

12. The system according to any one of claims 9-11, **characterized in that** each treatment stage (S1, S2) comprises means for circulating ultrafiltration-captured powder activated carbon (UF-PAC-1, UF-PAC-2) from the ultrafiltration unit (UF1, UF2) to the contacting unit (T1, T2) of the same treatment stage.

13. The system according to any one of claims 9-12, **characterized in that** the system comprises means for backwashing the ultrafiltration unit using a gas or a gaseous mixture, and water.

14. The system according to any one of claims 9-13, **characterized in that** the means for adding PAC is an inline mixing unit, which is arranged upstream of and in fluid connection with the inlet of the contacting unit (T 1, T2).

15. The system according to any one of claims 9-14, **characterized in that** the system is an on-site water treatment system, preferably arranged within a container.
